(19) Europäisches Patentamt / European Patent Office / Office européen des brevets

(11) **EP 3 979 484 B1**

(12) **EUROPÄISCHE PATENTSCHRIFT**

(45) Veröffentlichungstag und Bekanntmachung des Hinweises auf die Patenterteilung:
**15.04.2026  Patentblatt 2026/16**

(21) Anmeldenummer: **20199929.9**

(22) Anmeldetag: **02.10.2020**

(51) Internationale Patentklassifikation (IPC):
*H02M 7/23* (2006.01)          *H02M 7/493* (2007.01)
*H02M 1/12* (2006.01)          *H02M 1/00* (2006.01)
*H02J 3/38* (2026.01)          *H02J 3/46* (2026.01)
*H02P 9/00* (2006.01)

(52) Gemeinsame Patentklassifikation (CPC):
**H02M 7/23; H02J 3/381; H02J 3/46; H02M 1/0009;
H02M 1/0025; H02M 1/123; H02M 7/493;
H02P 9/00;** H02J 2101/28; H02P 2101/15;
Y02E 10/72; Y02E 10/76

(54) **VERFAHREN ZUM STEUERN EINER WINDENERGIEANLAGE**

METHOD FOR CONTROLLING A WIND ENERGY SYSTEM

PROCÉDÉ DE COMMANDE D'UNE ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(43) Veröffentlichungstag der Anmeldung:
**06.04.2022  Patentblatt 2022/14**

(73) Patentinhaber: **Wobben Properties GmbH
26607 Aurich (DE)**

(72) Erfinder: **Bakker, Menko
26605 Aurich (DE)**

(74) Vertreter: **Eisenführ Speiser
Patentanwälte Rechtsanwälte PartGmbB
Postfach 10 60 78
28060 Bremen (DE)**

(56) Entgegenhaltungen:
EP-B1- 2 262 089          DE-A1- 102014 219 052
JP-A- 2001 314 086

**Beschreibung**

Die vorliegende Erfindung betrifft ein Verfahren zum Steuern einer Windenergieanlage und die Erfindung betrifft eine entsprechende Windenergieanlage.

Windenergieanlagen sind bekannt, sie erzeugen mittels eines Generators elektrische Leistung aus dem Wind und speisen diese in ein elektrisches Versorgungsnetz ein. Eine häufige Topologie einer solchen Windenergieanlage arbeitet dabei so, dass der Generator einen Wechselstrom erzeugt, dieser Wechselstrom gleichgerichtet wird und aus diesem gleichgerichteten Strom, der dabei meist in einem Gleichspannungszwischenkreis bereitgestellt wird, mittels eines Wechselrichters der einzuspeisende Wechselstrom erzeugt wird.

Moderne Windenergieanlagen sind durch eine Nennleistung von mehreren MW gekennzeichnet. Zum Gleichrichten einer solchen von einem Generator erzeugten Leistung können mehrere Gleichrichter parallelgeschaltet sein. Sofern dies Gleichrichter aktiv angesteuert werden und damit auch den entsprechenden Generatorstrom, den sie gleichrichten, aktiv steuern, kann auch von generatorseitigen Wechselrichtern gesprochen werden. Diese können, zumindest theoretisch, baugleich mit den Wechselrichtern sein, die den in das elektrische Versorgungsnetz einzuspeisenden Wechselstrom erzeugen. Zur Vermeidung von Verwechslungen kann insoweit für den generatorseitigen Wechselrichter die Bezeichnung aktiver Gleichrichter sinnvoll sein und bildet ein Synonym.

Klassisch sind zum Wechselrichten passive Wechselrichter eingesetzt worden, die somit als Diodengleichrichter arbeiten. Im dreiphasigen Fall können diese Diodengleichrichter auch als sogenannte B6-Brücke oder als B6-Brückengleichrichter bezeichnet werden.

Als technische Verbesserung, insbesondere zur Verbesserung einer gezielten Ansteuerung des Generators und damit überhaupt für eine Verbesserung der Steuerung des Generators ist es sinnvoll oder sogar notwendig, die genannten aktiven Gleichrichter bzw. generatorseitigen Wechselrichter zu verwenden.

Auch hier können mehrere Wechselrichter parallelgeschaltet werden. Dadurch kann erreicht werden, dass kostengünstigere Wechselrichter verwendet werden können. Das ermöglicht auch, für unterschiedlich große Generatoren, also unterschiedliche Generatorleistungen, die gleichen Wechselrichter einzusetzen, aber je nach Leistung des Generators unterschiedlich viele Wechselrichter parallel zu schalten. Jeder Wechselrichter bildet dann einen Teilwechselrichter.

Um bei der Parallelschaltung solcher generatorseitigen Teilwechselrichter jede Phase des gleichzurichtenden Stroms, also des Generatorstroms, auf die Teilwechselrichter gleichmäßig aufzuteilen, kann für jeden Teilwechselrichter ein entsprechender Bruchteil des zu steuernden Generatorstroms der betreffenden Phase als Sollstrom vorgegeben werden. Sind beispielsweise drei Teilwechselrichter vorgesehen, kann jeder Teilwechselrichter ein Drittel des Generatorstroms steuern und dafür einen entsprechenden Sollwert bekommen, also jeweils ein Drittel des Gesamtsollstroms als Sollwert bekommen.

Allerdings sind diese Teilwechselrichter aufgrund ihrer Parallelschaltung generatorseitig verbunden. Außerdem können sie über einen gemeinsamen Gleichspannungszwischenkreis ebenfalls verbunden sein. Dadurch besteht die Gefahr, dass Kreisströme entstehen.

Solche Kreisströme können durch ausreichende Induktivitäten der generatorseitigen Wechselrichter gering gehalten werden. Auch entsprechende Induktivitäten, die einzelne Gleichspannungszwischenkreise der Teilwechselrichter verbinden, können solche Kreisströme gering halten.

Das Problem der Kreisströme kann dabei besonders bei Wechselrichtern auftreten, die mit einem Hystereseverfahren die Stromregelung durchführen. Bei einem solchen Hystereseverfahren wird für den zu steuernden Wechselstrom ein Toleranzband mit oberer und unterer Bandgrenze vorgegeben. Erreicht der erzeugte Strom eine der Bandgrenzen, wird entsprechend geschaltet, um den Strom in dem Toleranzband zu halten. Bei Kreisströmen tritt dann das Problem auf, dass in jedem Teilwechselrichter der erfasste Teilstrom, der dort in dem vorgegebenen Toleranzband geführt werden soll, Anteile eines Kreisstroms aufweisen kann. Das kann somit die Stromregelung ungünstig beeinflussen.

Solche Induktivitäten können allerdings unerwünscht sein, insbesondere, weil sie ein kostspieliges Bauteil sein können.

Die deutsche Offenlegungsschrift DE 10 2014 219 052 A1 betrifft ein Verfahren zum Erzeugen eines elektrischen Wechselstroms zum Einspeisen in ein elektrisches Versorgungsnetz, wobei mehrere Wechselrichter jeweils einen Teilstrom erzeugen und diese Teilstrome zu einem Gesamtstrom überlagert werden und dieser überlagerte Gesamtstrom in das Netz eingespeist wird. Dazu wird ein Toleranzbandverfahren eingesetzt, das Toleranzgrenzen in Abhängigkeit des erzeugten Gesamtstroms verändert.

Die japanische Patentanmeldung JP 2001-314086 A betrifft einen AC/DC-Wandler, bei dem ein Durchbruch eines Schaltelements bei einer Umwandlungsschaltung durch eine ungleiche Spannung, die durch einen unsymmetrischen Ausgang erzeugt wird, verhindert wird.

Die europäische Patentschrift EP 2 262 089 B1 offenbart ein System für den Betrieb eines Windturbinenstromwandlers. Dieses System verwendet u.a. mehrere parallelgeschaltete Umrichter, die mit phasenverschobenen Ansteuersignalen angesteuert werden können, um Gesamtschaltoberwellenkomponenten durch Aufhebung phasenverschobener Schaltwellenformen zu reduzieren.

Der vorliegenden Erfindung liegt somit die Aufgabe zugrunde, zumindest eins der oben genannten Probleme zu adressieren. Insbesondere soll eine Lösung geschaffen werden, bei der mit kleiner Induktivität an der Generatorseite eine Parallelschaltung der Wechselrichter möglich ist, insbesondere eine Parallelschaltung von Wechselrichtern mit einem Hystereseverfahren zur Stromregelung. Besonders sollen dabei unerwünschte Kreisströme vermieden werden. Zumindest soll zu bisher bekannten Lösungen eine Alternative vorgeschlagen werden.

Erfindungsgemäß wird ein Verfahren nach Anspruch 1 vorgeschlagen. Dieses Verfahren betrifft somit das Steuern einer Windenergieanlage nach Anspruch 8, die einen Generator zur Erzeugung eines Generatorstroms mit einer oder mehreren Generatorstromphasen aufweist. Insbesondere weist sie einen Generator auf, der drei Generatorstromphasen oder sechs Generatorstromphasen aufweist. Bei sechs Generatorstromphasen sind diese insbesondere als zwei dreiphasige Stromphasen ausgebildet.

Außerdem ist ein aktiver Gleichrichter zum Gleichrichten und Steuern des Generatorstroms vorgesehen. Der aktive Gleichrichter kann synonym auch als generatorseitiger Wechselrichter bezeichnet werden, denn er richtet nicht nur gleich, sondern steuert auch den Generatorstrom, nämlich gezielt. Insbesondere wird hier für den Generatorstrom konkret ein Sollstrom nach Betrag, Frequenz und Phase vorgegeben. Insbesondere wird als Generator ein Synchrongenerator verwendet und als Generatorstrom ein Statorstrom des Generators gesteuert.

Der aktive Gleichrichter weist für jede Generatorstromphase mehrere steuerbare Teilgleichrichter auf. Die steuerbaren Teilgleichrichter können auch als steuerbare generatorseitige Teilwechselrichter bezeichnet werden. Jeder steuerbare Teilgleichrichter ist durch eine Teilinduktivität gekennzeichnet. Dafür kann ein induktives Bauteil vorgesehen sein, diese Teilinduktivität kann sich aber auch nur oder zusätzlich aus dem konkreten Aufbau des Teilgleichrichters ergeben, einschließlich notwendiger Anschlussleitung.

Jeder steuerbare Teilgleichrichter steuert einen Teilstrom der Generatorstromphase und jede Generatorstromphase bildet einen Summenstrom als Summe aller Teilströme der betreffenden Generatorstromphase. Beispielsweise können für jede Phase drei steuerbare Teilgleichrichter vorgesehen sein. Jeder dieser drei steuerbaren Teilgleichrichter steuert einen Teilstrom, sodass insgesamt drei Teilströme gesteuert werden. Diese drei Teilströme setzen sich additiv zu dem Summenstrom zusammen.

Es ist nun vorgesehen, dass der aktive Gleichrichter so gesteuert wird, dass für jede Generatorstromphase der Summenstrom erfasst wird und jeder steuerbare Teilgleichrichter der betreffenden Stromphase seinen Teilstrom in Abhängigkeit von dem erfassten Summenstrom steuert.

Die Erfassung des Summenstroms kann insbesondere so vorgesehen sein, dass jeder Teilstrom gemessen wird und der Summenstrom aus diesen gemessenen Teilströmen rechnerisch zusammengesetzt wird. Das hat besonders den Vorteil, dass an den Teilgleichrichtern vorgenommene Strommessungen dafür verwendet werden können. Ein Sensor für den Gesamtstrom ist dann entbehrlich.

Jeder steuerbare Teilgleichrichter der betreffenden Stromphase steuert nun seinen Teilstrom in Abhängigkeit von diesem so erfassten Summenstrom. Besonders wird somit jeder steuerbare Teilgleichrichter durch den erfassten Summenstrom statt durch seinen Teilstrom geführt.

Besonders wird somit die Art der Steuerung aufgegeben, bei der jeder Teilgleichrichter eine individuelle Regelschleife vorsieht, die ihren Teilstrom, also den Istwert des Teilstroms, auf einen Sollwert für ihren Teilstrom regelt. Besonders wird ein Steuerungsprinzip aufgegeben, bei dem der gewünschte Summenstrom, also der gewünschte Generatorstrom der betreffenden Phase, in einzelne Teilstromsollwerte aufgeteilt wird und jeder dieser Teilstromsollwerte durch einen Teilgleichrichter gesteuert wird. Stattdessen wird nur für den vorgesehenen Summenstrom, also für den vorgesehenen Generatorstrom der betreffenden Phase, ein Summenstromsollwert vorgegeben und abhängig davon, wie sich der erfasste Summenstrom in Bezug auf den vorgegebenen Summenstromsollwert verhält, jeder einzelne Teilgleichrichter angesteuert, um dadurch insgesamt dann den erfassten Summenstrom zu steuern. Insbesondere wird somit vorgeschlagen, dass kein Sollwert für jeden Teilgleichrichter vorgegeben wird.

Hier wurde besonders erkannt, dass durch die Betrachtung des Summenstroms vermieden wird, dass Kreisströme die individuelle Regelung in jedem einzelnen Teilgleichrichter ungünstig beeinflussen. Jeder einzelne Teilgleichrichter kann auch als Teilgleichrichter mit lokaler Regelung bezeichnet werden und es wird somit durch die vorgeschlagene Lösung vermieden, dass Kreisströme die lokale Regelung beeinflussen. Der Summenstrom enthält nämlich die Kreisströme nicht.

Gemäß einer Ausführungsform wird vorgeschlagen, dass der aktive Gleichrichter nach einem Hystereseverfahren arbeitet, wobei für jeden Summenstrom ein Toleranzband mit einer oberen und einer unteren Bandgrenze vorgegeben wird und jeder Teilgleichrichter abhängig davon seinen Teilstrom steuert, ob der Summenstrom die obere oder untere Bandgrenze erreicht.

Ein übliches Toleranzbandverfahren sieht vor, dass für den jeweils zu steuernden Strom überprüft wird, ob dieser eine Bandgrenze erreicht, und dann, bei Erreichen der Bandgrenze, entsprechend geschaltet wird. Bei bisherigen Verfahren ist das für die Teilgleichrichter so umgesetzt worden, dass sie jeweils einen Teilstrom erzeugen und für diesen Teilstrom überprüfen, ob dieser in dem für ihn vorgegebenen Toleranzband ist. Es würde also geschaltet werden, wenn dieser Teilstrom eine obere oder untere Bandgrenze seines Toleranzbandes erreicht. Diese Variante wird hier nicht eingesetzt.

Stattdessen ist vorgesehen, dass immer noch jeder Teilgleichrichter zum Steuern des Stroms und damit auch zum Steuern seines Teilstroms, entsprechende Schalthandlungen vornimmt. Der Auslöser ist nun aber nicht mehr, ob der Teilstrom eine seiner Bandgrenzen erreicht, sondern ob der Summenstrom eine Bandgrenze erreicht. Davon abhängig schaltet dann jeder der Teilgleichrichter, deren Teilströme sich zu dem betrachteten Summenstrom zusammensetzen. Insoweit wird das Erreichen einer Bandgrenze durch den erfassten Summenstrom an alle Teilgleichrichter gemeldet, die dann alle davon abhängig entsprechend reagieren.

Insbesondere ist vorgesehen, dass jeder Teilgleichrichter wenigstens ein Schaltmittel aufweist, um seinen Teilstrom durch Schalten des Schaltmittels zu steuern, und es ist dabei vorgesehen, dass das Schalten des Schaltmittels abhängig davon gesteuert wird, ob der Summenstrom die obere oder untere Bandgrenze erreicht.

Es wird hier also zentral der Summenstrom überwacht, ob er eine Bandgrenze erreicht, und falls das so ist, wird dann aber individuell von jedem Teilgleichrichter entsprechend geschaltet. Die einzelnen Teilströme werden also weiterhin von den Teilgleichrichtern erzeugt, auch durch Schalten des Schaltmittels. Das Auslösen dieser Schalthandlungen wird aber zentral gesteuert durch die Überwachung des Summenstroms in dem Toleranzband für den Summenstrom.

Es kann also ein Hystereseverfahren verwendet werden, das auch als Toleranzbandverfahren bezeichnet werden kann, das für jede Generatorstromphase mehrere Teilgleichrichter parallelschaltet und dabei gegen Kreisströme unanfällig ist. Die Teilinduktivitäten können dafür auch klein dimensioniert sein, falls sie überhaupt als eigene Bauelemente vorgesehen sind. Insbesondere können solche Teilinduktivitäten gegebenenfalls für andere Aufgaben eingesetzt werden bzw. für andere Aufgaben dimensioniert werden, besonders für eine Filterfunktion. Es können kleine Teilinduktivitäten vorgesehen sein, die somit gegenüber größeren Teilinduktivitäten zu einer Kostenreduzierung führen.

Gemäß einer Ausführungsform ist vorgesehen, dass jedem Teilgleichrichter eine individuelle Verzögerungszeit zugeordnet ist und jeder Teilgleichrichter seinen Teilstrom zusätzlich in Abhängigkeit von dieser individuellen Verzögerungszeit steuert. Das Zuordnen dieser individuellen Verzögerungszeit wird insbesondere basierend auf den physikalischen Gegebenheiten vorgenommen. Insbesondere wird eine tatsächlich wirkende Verzögerungszeit für jeden Teilgleichrichter ermittelt und als individuelle Verzögerungszeit zugeordnet. Die individuelle Verzögerungszeit kann zum Beispiel von Leitungslängen abhängen, oder aufgrund von Herstellungstoleranzen der Bauteile variieren. Es kommt aber auch in Betracht, dass die individuelle Verzögerungszeit bewusst auf gewisse Werte gesetzt wird, um dadurch Einfluss auf die Steuerung zu nehmen.

Insbesondere ist hier vorgesehen, dass jeder Teilgleichrichter wenigstens eines seiner Schaltmittel schaltet, nachdem der Summenstrom die obere oder untere Bandgrenze erreicht hat und die individuelle Verzögerungszeit verstrichen ist. Dadurch wird auch erreicht, dass die Teilgleichrichter der betreffenden Phase nicht exakt synchron geschaltet werden, obwohl sie aber alle in Abhängigkeit davon geschaltet werden, wann der Summenstrom die obere oder untere Bandgrenze erreicht hat.

Eine individuelle Verzögerungszeit bezeichnet dabei auch insbesondere die Zeit, die vergeht, bis eine Schalthandlung des Teilgleichrichters eine signifikante Auswirkung auf den Summenstrom hat. Beispielsweise kann die individuelle Verzögerungszeit diejenige Zeit sein, die nach dem Schalten des Teilgleichrichters vergeht, bis der dadurch erzeugte Strom im betrachteten Summenstrom zumindest mit einem Wert von 63 % angekommen ist. Ein solches Verhalten kann bspw. durch ein Testsignal ermittelt werden, indem die Auswirkung eines gezielt vorgegebenen Schaltsignals erfasst und in Bezug zu diesem Schaltsignal gesetzt wird.

Vorzugsweise wird vorgeschlagen, dass die Verzögerungszeit, also die individuelle Verzögerungszeit, jeweils in Abhängigkeit von der Teilinduktivität des Teilgleichrichters bestimmt wird. Diese Teilinduktivität beeinflusst, wie lange ein durch eine Schalthandlung erzeugter Teilstrom bzw. wie lange eine durch die Schalthandlung erzeugte Änderung des Teilstroms benötigt, bis sie am Summenstrom wirksam geworden ist. Wie beschrieben kann hier statt einer 100%igen Wirksamkeit eine 63%ige Wirksamkeit zugrunde gelegt werden. Insoweit würde hier die individuelle Zeitkonstante wie die Zeitkonstante eines Verzögerungsglieds erster Ordnung definiert werden.

Gemäß einer Ausführungsform wird vorgeschlagen, dass eine Abweichung jedes Teilstroms von einem mittleren Teilstrom erfasst wird und abhängig von der Abweichung der Teilgleichrichter gesteuert wird, insbesondere die individuelle Verzögerungszeit bestimmt wird.

Jeder Teilgleichrichter erzeugt einen Teilstrom und alle Teilströme setzen sich zu dem Summenstrom zusammen. Sind beispielsweise drei Teilgleichrichter vorgesehen, entspricht der mittlere Teilstrom einem Drittel des Summenstroms. Im Idealfall entspricht jeder Teilstrom dem mittleren Teilstrom. Im genannten Beispiel würde im genannten Idealfall jeder der drei Teilgleichrichter ein Drittel des Summenstroms erzeugen. Aufgrund individueller Abweichung, insbesondere aufgrund unterschiedlicher Leitungslängen und Bauteilvarianzen, können sich diese Teilströme aber unterscheiden. Und diesen Unterschied kann man durch Vergleich mit dem mittleren Teilstrom erfassen. Und der so erfasste Unterschied kann verwendet werden, um die individuelle Verzögerungszeit zu bestimmen. Besonders spiegelt sich nämlich ein solcher Unterschied der Teilströme in einer entsprechenden zeitlichen Abweichung zum mittleren Teilstrom wider.

Gemäß einer Ausführungsform wird vorgeschlagen, dass in Abhängigkeit von einer Teilgleichrichterspannung und in Abhängigkeit von einem der Teilgleichrichterspannung zugeordneten Stromverlauf und in Abhängigkeit von einer Generatorinduktivität des Generators ein dynamischer Zusammenhang zwischen einer Schalthandlung eines Teilgleichrichters und eines resultierenden Teilstroms aufgestellt wird. Und dazu wird vorgeschlagen, dass in Abhängigkeit von diesem dynamischen Zusammenhang und in Abhängigkeit von dem erfassten Summenstrom der Teilgleichrichter gesteuert wird.

Ein solcher dynamischer Zusammenhang zwischen einer Schalthandlung eines Teilgleichrichters und eines resultierenden Teilstroms kann besonders ein dynamischer Zusammenhang, also eine zugrundeliegende Dynamik sein, die eine Sprungantwort kennzeichnet. Der dynamische Zusammenhang kann als Übertragungsfunktion bezeichnet werden oder als Übertragungsfunktion angegeben werden, insbesondere im regelungstechnischen Sinne. Wobei bei einer solchen Erläuterung zu beachten ist, dass eine Sprungantwort, bzw. der entsprechende Eingangssprung, meist idealisierend angenommen wird. Eine Schalthandlung ist besonders das Öffnen oder Schließen eines Halbleiterschalters des Teilgleichrichters. Die für die Differentialgleichung angenommene Teilgleichrichterspannung kann dann idealisierend einen Sprung ausführen, sei es nun von null auf einen Spannungswert, oder von einem Spannungswert auf null.

Eine solche Sprungantwort, um bei dieser anschaulichen und in der Regelungstechnik üblichen Beschreibung zu bleiben, wird auch durch die Generatorinduktivität beeinflusst und zusätzlich durch eine Eigenschaft des Teilgleichrichters, insbesondere durch die Teilinduktivität des betrachteten Teilgleichrichters. Für diesen grundsätzlichen Zusammenhang kann eine Differentialgleichung aufgestellt werden, die diese Eigenschaften dem Grunde nach beschreibt. Konkrete Werte, oder zumindest ein konkreter Wert, nämlich bedingt durch die Teilinduktivität, kann aber unbekannt sein. Die Differentialgleichung beinhaltet eine Spannung, die aber nicht erfasst zu werden braucht, sondern vielmehr nur zum Aufstellen der Differentialgleichung dient. Die Differentialgleichung kann gelöst werden, um die unbekannte Eigenschaft zu erhalten. Diese unbekannte Eigenschaft kann in der Differentialgleichung als Zeitkonstante berücksichtigt sein. Diese Zeitkonstante wird dann ihrem Wert nach durch das Lösen der Differentialgleichung ermittelt. Die Differentialgleichung wird also gelöst, um wenigstens einen bis dahin unbekannten Parameter zu bestimmen, besonders eine bis dahin unbekannte Zeitkonstante.

Somit kann also dieser dynamische Zusammenhang durch die Differentialgleichung dem Grunde nach beschrieben werden, durch Erfassung jeweils auch eines Stromverlaufs auch quantitativ festgestellt werden.

Das Ergebnis ist somit der dynamische Zusammenhang, der auch quantitativ bekannt ist, also besonders die Übertragungsfunktion. In Abhängigkeit von diesem dynamischen Zusammenhang und in Abhängigkeit von dem erfassten Summenstrom wird dann der Teilgleichrichter gesteuert. Die Steuerung in Abhängigkeit von dem erfassten Summenstrom kann somit so durchgeführt werden wie oben zu anderen Ausführungsformen beschrieben wurde.

Somit wird insbesondere vorgeschlagen, dass in Abhängigkeit von diesem dynamischen Zusammenhang die Verzögerungszeit bestimmt wird, also die konkrete Verzögerungszeit des betrachteten Teilgleichrichters. Der Teilgleichrichter wird dann in Abhängigkeit von der so ermittelten Verzögerungszeit gesteuert. Seine Schalthandlungen werden nämlich in Abhängigkeit davon gesteuert.

Die am Teilgleichrichter erfasste Spannung ist insbesondere die Ausgangsspannung an dem Teilgleichrichter der betreffenden Phase. Eine Teilgleichrichterspannung am Ausgang des Teilgleichrichters führt dann zu einem Stromverlauf, nämlich besonders bedingt durch die Teilinduktivität und die Generatorinduktivität. Dieser Zusammenhang wird durch die Differentialgleichung bzw. durch ein Differentialgleichungssystem beschrieben und darin ist jeweils ein Stromverlauf einem Spannungsverlauf, besonders einem Spannungssprung zugeordnet.

Das folgende Beispiel liefert eine beispielhafte Erklärung.

Für das gewählte Beispiel kann eine Teilinduktivität vorhanden sein und als L_GR_d bezeichnet werden, wobei ihr Wert L_GR_d = 100μH / Umrichtereinheit betragen kann, also 100μH / Teilgleichrichter. Dabei können bei diesem Beispiel 7 Teilgleichrichter zu einem Gleichrichter verschaltet sein. Der Generator kann dann wiederum eine Induktivität von 10mH/Teilgeneratorsystem betragen, für ein Beispiel, in dem 4 Teilgeneratorsysteme zu einem Generatorsystem verschaltet sind. Es zeigt sich also bei 7 aktiven Gleichrichtern eine wirksame Induktivität von 100μH/7 gegenüber einer Generatorinduktivität von 10mH/4. Die Zeitkonstante der Stromänderung im Generator lässt daher den o.g. Zusammenhang der Induktivitäten zu.

Im transienten Übergang ist nun also nur das Verhalten der 7 Umrichter untereinander relevant. Wenn nun bspw. 6 Teilgleichrichter, die auch als Umrichter bezeichnet werden können, einen identischen Teilstrom von 100A führen und der 7te Teilgleichrichter nur 93A führt. Der Vorzustand sei, dass alle Schaltorgane eingeschaltet sind und die obere Summengrenze verletzt wird, der Zielzustand also ist, dass alle Schaltorgane aus sind. Ziel ist nun, im Übergang die Differenzen aufzuheben, sodass die Summe 6*100A+1*93A = 693 durch 7*99A = 693A wieder erreicht ist.

Durch den Ansatz, die Gleichrichter in der Form 6*AUS und 1*EIN für eine gewisse Zeit einzuschalten, ergibt sich eine induktive serielle Schaltung aus 100μH + 100μH/6 = 116 μH, über der nun die volle Zwischenkreisspannung Uzw (z.B. 1160V) anliegt.

In dieser Gesamtinduktivität muss nun eine Stromänderung von 6A (93A+6A=99A) herbeigeführt werden. Ideal gilt dabei

$$Uzw = L * di/dt$$

$$-> \quad dt = L/Uzw * di = 116\mu H/1160V * 6A = 6.0000e{-}07s = 600ns$$

Dies ist ein anschauliches Beispiel, das sich beliebig für andere Zustände aufstellen lässt. Insbesondere wenn die Ströme nicht so gleichartig sind wie in diesem anschaulichen Beispiel, können sich im Übergang bis zu 6 temporär gültige Gleichungen ergeben, wenn 7 Teilgleichrichter vorhanden sind bzw. betrachtet werden. Ebenfalls ist die Richtung der Schalthandlung relevant, im obigen Beispiel wäre die Spannung bei einer Einschaltung entsprechend so zu wählen, dass früher eingeschaltet wird. Dies kann insbesondere für den Eingang von PI-Reglern für eine Vorsteuerung relevant sein.

Gemäß einer Ausgestaltung wird vorgeschlagen, dass eine Zentralsteuerung den Summenstrom erfasst, Steuersignale für die Teilgleichrichter erzeugt und an die Teilgleichrichter überträgt, um die Teilgleichrichter zu steuern. Somit ist eine Zentralsteuerung vorgesehen, die in Abhängigkeit von dem Summenstrom die Teilgleichrichter steuert und dazu entsprechende Steuersignale erzeugt und an die Teilgleichrichter überträgt.

Insbesondere werden individuelle Schaltzeitanpassungen für die Teilgleichrichter ermittelt. Die Schaltzeitpunkte sind für die Teilgleichrichter wichtig, um den gewünschten Teilstrom zu erzeugen. Um in Abhängigkeit von dem erfassten Summenstrom mit jedem Teilgleichrichter den gewünschten Teilstrom zu erzeugen, sind diese individuellen Schaltzeitanpassungen vorgesehen. Diese Schaltzeitanpassungen können die individuelle Verzögerungszeit beinhalten und außerdem Signallaufzeiten berücksichtigen.

Optional ist vorgesehen, dass diese Schaltzeitanpassungen an die Teilgleichrichter übertragen werden, insbesondere durch die Zentralsteuerung. Es kommt aber auch in Betracht, dass die Schaltzeitanpassungen in der Zentralsteuerung berücksichtigt werden.

Insbesondere ist vorgesehen, dass für die Schaltzeitanpassungen Laufzeiten für das Übertragen von Steuersignalen der Zentralsteuerung zum jeweiligen Gleichrichter ermittelt und beim Ermitteln der Schaltzeitanpassung berücksichtigt werden. Es wurde erkannt, dass durch die Kommunikation ein zeitdiskreter Takt von $1\mu s$ (Taktzeit) technisch vertretbar zu erreichen ist, wobei die zu steuernden Zeiten unterhalb dieser Taktzeit liegen können. Es kommt auch in Betracht, dass diese Taktzeit teilweise aber auch kleiner ist, als technisch realisierbare Zeiten. Daher würde die jeweils anzupassende Zeit, also die jeweiligen Schaltzeitanpassungen, zwar zentral berechnet, aber vorzugsweise mit dem umzusetzenden Vektor an die lokale Seite kommuniziert. Es werden gemäß dieser Ausführung also alle Schaltzeitanpassungen in dem umzusetzenden Vektor gebündelt und gemeinsam übertragen, so dass dadurch unterschiedliche Laufzeiten vermieden werden.

Somit wurde erkannt, dass nicht nur individuelle Verzögerungszeiten relevant sein können, die physikalische Verzögerungen zwischen dem jeweiligen Schaltzeitpunkt des Teilgleichrichters und dem Wirksamwerden im Summenstrom betreffen, sondern dass auch das Übertragen von Steuersignalen von der Zentralsteuerung zu jedem Teilgleichrichter zu berücksichtigen sind. Das kann bedeuten, dass solche Übertragungszeiten zwischen der Zentralsteuerung und jedem Teilgleichrichter gleich sind bzw. Abweichungen zu vernachlässigen sind, es kann aber auch bedeuten, dass Unterschiede bestehen, die nicht zu vernachlässigen sind. Das kann auch von der gewählten Übertragungsart abhängen. Vorzugsweise wird vorgeschlagen, solche Laufzeiten individuell zwischen der Zentralsteuerung und jedem Teilgleichrichter zu ermitteln, wenn sie nicht gemeinsam, insbesondere in einem gemeinsamen Vektor, übertragen werden.

Insbesondere wird vorgeschlagen, dass beim Ermitteln der Schaltzeitanpassungen die individuellen Verzögerungszeiten der Teilgleichrichter und/oder die Laufzeiten für das Übertragen von Informationen von der Zentralsteuerung zum jeweiligen Teilgleichrichter in einem Steuerprotokoll abgespeichert und zum Steuern der Teilgleichrichter verwendet werden.

Eine Steuerungsmöglichkeit ist, dass die Zentralsteuerung ein zentrales identisches Steuersignal an alle eine Phase betreffenden Teilgleichrichter versendet und dann jeder Teilgleichrichter in Abhängigkeit von seiner individuellen Schaltzeitanpassung seine Schaltzeit anpasst. Der Teilgleichrichter berücksichtigt dann insbesondere selbst seine individuelle Verzögerungszeit und die für ihn relevante Laufzeit für das Übertragen von Informationen von der Zentralsteuerung zu ihm.

Hier wird vorzugsweise vorgeschlagen, die individuellen Verzögerungszeiten vorab zu bestimmen, insbesondere zu vermessen. Dazu kann ein initiales Einmessen vor Inbetriebnahme des Gleichrichters vorgenommen werden, was hier als eine Ausführungsform vorgeschlagen wird.

Bei dem vorgeschlagenen Abspeichern der individuellen Verzögerungszeiten und/oder der Laufzeiten in dem Steuerprotokoll wird eine Variante vorgeschlagen, bei der die Zentralsteuerung diese individuellen Zeiten jedes Teilgleichrichters berücksichtigt. Zur Ansteuerung wird dann von der Zentralsteuerung der Summenstrom überwacht. Das kann allerdings so erfolgen, dass die Zentralsteuerung dafür die Werte jeder Teilströme von den Teilgleichrichtern erhält.

Erreicht der erfasste Summenstrom dann eine Bandgrenze, werden die Teilgleichrichter zum Schalten von der Zentralsteuerung individuell angesteuert. Das kann so erfolgen, dass die Zentralsteuerung die Schaltzeitanpassung jedes Teilgleichrichters berücksichtigt, insbesondere damit die individuelle Verzögerungszeit und die Laufzeit für das Übertragen von Informationen für jeden Teilgleichrichter individuell berücksichtigt. Anhand dessen kann dann an jeden Teilgleichrichter zu individuellen Zeiten ein Steuersignal, also ein Schaltbefehl, von der Zentralsteuerung gesendet werden. Jeder Schaltbefehl, der von der Zentralsteuerung ausgesendet wird, ist dann zeitlich genau so koordiniert, dass der jeweils angesteuerte Teilgleichrichter dann im richtigen Zeitpunkt schaltet.

Gemäß einer Ausführungsform wird eine Steuerungsstruktur vorgeschlagen, die eine sternförmige Kommunikation mit zentralem Takt vorsieht. Die Kommunikation kann so aufgebaut sein, dass eine konstante Verzögerungszeit mit einer geringen Schwankung, z.B. von maximal 10ns (maximaler Jitter von 10ns) erreicht wird.

Gemäß dieser Ausführungsform können also zeitgleich an alle Teilgleichrichter die Schaltsignale mit der für alle gleichen Verzögerung übertragen werden.

Die genannten Laufzeiten können besonders durch elektrisch/optisch/elektrische Wandlung und/oder durch eine Treiberstufe, nämlich insbesondere einen Gatewiderstand und eine Gatekapazität verursacht werden.

Gemäß einer Ausführungsform wird vorgeschlagen, dass jeder Teilgleichrichter Schalthandlungen zum Erzeugen eines Spannungspulses ausführt, wobei jeweils eine auslösende Schalthandlung vorgesehen ist, um einen Spannungspuls auszulösen, und eine beendende Schalthandlung vorgesehen ist, um einen Spannungspuls zu beenden, und ein zeitlicher Abstand zwischen der auslösenden Schalthandlung und der beendenden Schalthandlung des Spannungspulses eine Pulsbreite des Spannungspulses beschreibt, wobei für die auslösende Schalthandlung und die beendende Schalthandlung unterschiedliche Schaltzeitanpassungen bzw. unterschiedliche und insbesondere variable Verzögerungszeiten vorgesehen sind, um dadurch die Pulsbreite zu steuern.

Der in jedem Teilgleichrichter zu erzeugende Teilstrom hängt besonders von dem Spannungspuls und der Teilinduktivität ab, zusätzlich von einer Generatorinduktivität. Um den Teilstrom eines ersten Teilgleichrichters gegenüber dem Teilstrom eines zweiten Teilgleichrichters zu erhöhen, kann das dadurch erfolgen, dass der Spannungspuls verbreitert wird. Das kann durch die entsprechende Wahl der Schaltzeitanpassungen bzw. Verzögerungszeiten der auslösenden und beendenden Schalthandlungen erreicht werden. Um den Spannungspuls breiter zu machen, kann die auslösende Schalthandlung zeitlich vorgezogen werden, also weniger verzögert werden, und/oder die beendende Schalthandlung zeitlich nach hinten geschoben werden, also mehr verzögert werden.

Die Spannungspulse können positiv oder negativ sein. Die auslösende Schalthandlung kann also eine ansteigende oder abfallende Spannungsflanke auslösen und entsprechend kann die beendende Schalthandlung eine abfallende bzw. ansteigende Flanke auslösen und dadurch den positiven Spannungspuls bzw. den negativen Spannungspuls beenden.

Besonders kann hierdurch die Pulsbreite verlängert oder verkürzt werden. Die ursprüngliche Breite kann sich dabei aus einem Toleranzbandregler ergeben, der hier generell vorgeschlagen wird, nämlich als Stromregler in jedem Teilgleichrichter. Die Eingriffe, die diese Breite verändern, bestehen in einem zeitlichen Verhalten, sodass die Verlängerung der Pulsbreite nicht relevant ist zur Gesamtlänge der Ansteuerung. Das grundsätzliche Verhalten des Toleranzbandreglers wird somit nicht verändert, nur einzelne Umschaltzeiten werden verändert.

Gemäß einer Ausführungsform wird vorgeschlagen, dass jeweils drei Teilgleichrichteranordnungen, nämlich jeweils eine Teilgleichrichteranordnung einer ersten, zweiten und dritten Generatorstromphase, zusammen mit einer netzseitigen Teilwechselrichteranordnung einen Teil-Back-to-Back-Umrichter bilden. Jeder Teil-Back-to-Back-Umrichter weist einen gemeinsamen Gleichspannungszwischenkreis auf, auf den die Teilgleichrichter jeweils einer Teilgleichrichteranordnung gleichrichten und von dem aus die Teilwechselrichteranordnung wechselrichtet. Dazu wird weiter vorgeschlagen, dass die Gleichspannungszwischenkreise mehrerer Teil-Back-to-Back-Umrichter gekoppelt sind, um Kreisströme über diese gekoppelten Gleichspannungszwischenkreise zuzulassen.

Hier wurde besonders erkannt, dass im Sinne des erfindungsgemäßen Verfahrens keine Kreisströme gewollt gesteuert werden sollen. Das Verfahren arbeitet so, dass es weitestgehend die Kreisströme aussteuert bzw. vermeidet. Es wurde aber erkannt, dass insbesondere bei der Berechnung der Schaltzeitanpassungen berücksichtigt werden kann, dass insbesondere netzseitig gewollte Kreisströme nicht kompensiert werden. Sie können dann als Ausgleichsströme zwischen den Phasen auftreten und entsprechend zugelassen werden.

8 Erfindungsgemäß wird auch eine Windenergieanlage nach Anspruch vorgeschlagen und diese Windenergieanlage umfasst

- einen Generator zur Erzeugen eines Generatorstroms mit einer oder mehreren Generatorstromphasen, und
- einen aktiven Gleichrichter zum Gleichrichten und Steuern des Generatorstroms, wobei der Gleichrichter für jede Generatorstromphase

    - mehrere steuerbare Teilgleichrichter aufweist,
    - jeder steuerbare Teilgleichrichter durch eine Teilinduktivität gekennzeichnet ist, und

- jeder steuerbare Teilgleichrichter einen Teilstrom der Generatorstromphase steuert und jede Generatorstromphase einen Summenstrom als Summe aller Teilströme der betreffenden Generatorstromphase bildet, wobei

- die Windenergieanlage eine Steuereinheit zum Steuern des aktiven Gleichrichters aufweist, und wobei die Steuereinheit dazu eingerichtet ist, dass
- der aktive Gleichrichter so gesteuert wird, dass für jede Generatorstromphase

- der Summenstrom erfasst wird und
- jeder steuerbare Teilgleichrichter der betreffenden Stromphase seinen Teilstrom in Abhängigkeit von dem erfassten Summenstrom steuert, wobei

- jedem Teilgleichrichter (201-203) eine individuelle Verzögerungszeit zugeordnet ist, und
- jeder Teilgleichrichter (201-203) seinen Teilstrom zusätzlich in Abhängigkeit dieser individuellen Verzögerungszeit steuert.

Somit weist die Windenergieanlage eine Steuereinheit auf zum Steuern des aktiven Gleichrichters. Die Steuereinheit ist dazu eingerichtet, den aktiven Gleichrichter so zu steuern, dass für jede Generatorstromphase der Summenstrom erfasst wird und jeder steuerbare Teilgleichrichter der betreffenden Stromphase einen Teilstrom in Abhängigkeit von dem erfassten Summenstrom steuert. Insbesondere kann die Steuereinheit dadurch für diese Steuerung eingerichtet sein, dass ein entsprechender Ablauf als Ablaufcode oder Ablaufprogramm in der Steuereinheit implementiert ist. Außerdem weist die Steuereinheit entsprechende Schnittstellen auf, um den Summenstrom zu erfassen. Dazu kann sie die Teilströme jedes Teilgleichrichters erfassen und daraus den Summenstrom ermitteln. Das Erfassen der Teilströme kann so vorbereitet sein, dass die Steuereinheit dazu jeweils Werte von den Teilgleichrichtern erhält. Entsprechende Mess- und/oder Steuerelemente der einzelnen Teilgleichrichter können somit mit der Steuereinheit verbunden sein oder sie können Teil der Steuereinheit sein.

Insbesondere ist vorgesehen, dass die Windenergieanlage, insbesondere die Steuereinheit, dazu vorbereitet ist, ein Verfahren gemäß einer der vorstehend beschriebenen Ausführungsformen durchzuführen. Dafür kann ein entsprechender Ablauf insbesondere als Programm in der Steuereinheit implementiert sein.

Insoweit die Verfahren eine Zentralsteuerung verwenden, kann diese Teil der Steuereinheit sein.

Die Erfindung wird nun nachfolgend exemplarisch anhand von Ausführungsbeispielen unter Bezugnahme auf die begleitenden Figuren näher erläutert.

Figur 1    zeigt eine Windenergieanlage in einer perspektivischen Darstellung.

Figur 2    zeigt schematisch einen Gleichrichter einer Phase exemplarisch mit drei Teilgleichrichtern.

Figur 3    zeigt schematisch eine Struktur zum Ansteuern mehrerer Teilgleichrichter.

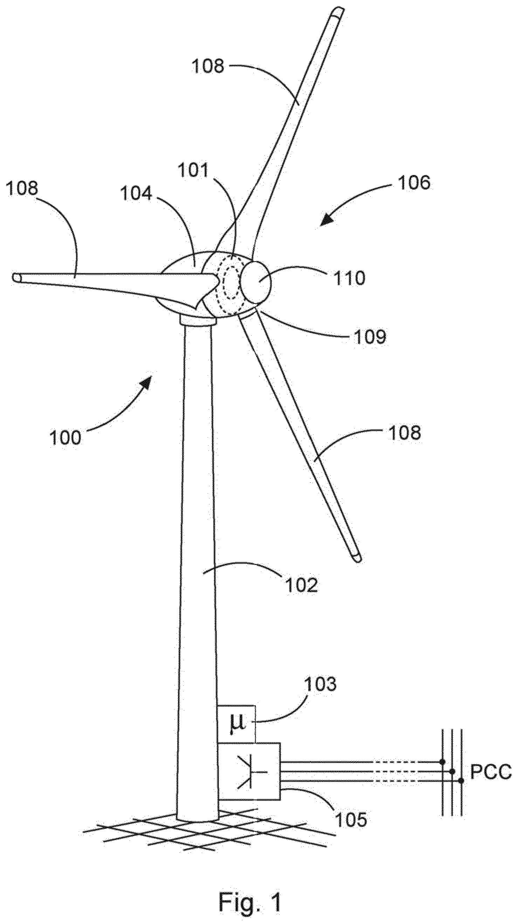

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 109 der jeweiligen Rotorblätter 108 verändert werden.

Die Windenergieanlage 100 weist dabei einen elektrischen Generator 101 auf, der in der Gondel 104 angedeutet ist. Mittels des Generators 101 kann elektrische Leistung erzeugt werden. Zum Einspeisen elektrischer Leistung ist eine Einspeiseeinheit 105 vorgesehen, die besonders als Wechselrichter ausgebildet sein kann. Damit kann ein dreiphasiger Einspeisestrom und/oder eine dreiphasige Einspeisespannung nach Amplitude, Frequenz und Phase erzeugt werden, zum Einspeisen an einem Netzanschlusspunkt PCC. Das kann direkt oder auch gemeinsam mit weiteren Windenergieanlagen in einem Windpark erfolgen. Zum Steuern der Windenergieanlage 100 und auch der Einspeiseeinheit 105 ist eine Anlagensteuerung 103 vorgesehen. Die Anlagensteuerung 103 kann auch Vorgabewerte von extern, insbesondere von einem zentralen Parkrechner erhalten. An den Generator 101 ist ein aktiver Gleichrichter angeschlossen, der Teil der Einspeiseeinheit 105 sein kann.

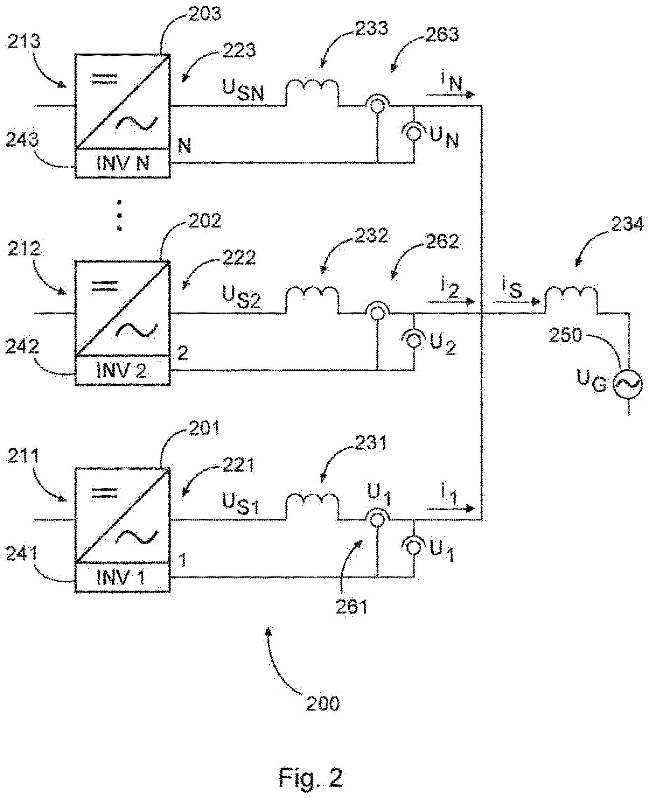

Figur 2 veranschaulicht eine Teilgleichrichteranordnung 200 einer Phase, die mehrere Teilgleichrichter 201 - 203 umfasst. Mehrere solche Teilgleichrichteranordnungen 200 einer Phase können dann zusammen einen gesamten aktiven Gleichrichter bilden, der dann insgesamt zum Gleichrichten und Steuern des Generatorstroms eines Generators einer Windenergieanlage verwendet wird. Hier wird aber nur eine Teilgleichrichteranordnung einer Phase betrachtet.

Entsprechende Teilgleichrichteranordnungen sind für weitere Phasen vorgesehen.

Die Teilgleichrichteranordnung 200 einer Phase weist somit drei Teilgleichrichter 201 - 203 auf. Der dritte Teilgleichrichter 203 kann auch als Teilgleichrichter N repräsentativ für alle weiteren Teilgleichrichter stehen, die insgesamt die Teilgleichrichteranordnung 200 einer Phase bilden.

In dieser Figur 2 soll die grundsätzliche Struktur des Aufbaus dieser Teilgleichrichteranordnung 200 einer Phase aus mehreren Teilgleichrichtern 201 - 203 erläutert werden, nämlich generatorseitig. Jeder Teilgleichrichter 201 - 203 kann einen DC-Ausgang 211 - 213 aufweisen. Jeder Teilgleichrichter 201 - 203 kann auch als Teil einer Teilumrichteranordnung, ausgebildet sein. In diesem Fall wäre intern ein Gleichspannungszwischenkreis vorgesehen und statt des DC-Ausgangs 211 - 213 wäre ein Wechselspannungsausgang vorgesehen.

Jeder Teilgleichrichter 201 - 203 weist einen generatorseitigen Ausgang 221 - 223 auf. Außerdem weist jeder Teilgleichrichter 201 - 203 eine Teilinduktivität 231 - 233 auf. Jede Teilinduktivität 231 - 233 ist in der Figur 2 als am generatorseitigen Ausgang 221 - 223 angeschlossenes Bauelement symbolisiert. Sie steht aber repräsentativ auch für Induktivitäten, die sich beispielsweise durch die Zuleitung ergeben können, bzw. berücksichtigt diese mit.

Zum Ansteuern jedes Teilgleichrichters 201 - 203 ist ein Steuerteil 241 - 243 vorgesehen. Das Steuerteil kann Steuersignale empfangen und damit Halbleiterschalter des Teilgleichrichters ansteuern, um dadurch ein gepulstes Spannungssignal zu erzeugen, das zu einem modulierten sinusförmigen Strom führen soll. Dabei stellt sich unmittelbar am generatorseitigen Ausgang des Wechselrichters eine Schaltspannung $U_{S1}$, $U_{S2}$ bzw. $U_{SN}$ ein, die im Wesentlichen abhängig von den entsprechenden Schalterstellungen zwischen einem positiven Wert, negativen Wert und dem Wert null wechselt. Am generatorseitigen Ausgang der Teilinduktivität 231, 232 bzw. 233 stellt sich eine generatorseitige Spannung $U_1$, $U_2$ bzw. $U_N$ ein und ein generatorseitiger Strom $i_1$, $i_2$ bzw. $i_N$. Jeder dieser generatorseitigen Ströme $i_1$, $i_2$ bzw. $i_N$ bildet einen Teilstrom des Generatorstroms der betreffenden Phase aus. Dieser Generatorstrom der betreffenden Phase bildet somit den Summenstrom dieser Generatorstromphase. Dieser ist als Summenstrom $i_S$ in Figur 2 eingezeichnet und fließt durch eine Generatorinduktivität 234. Der Generator 250 ist hier in der schematischen Darstellung der Figur 2, die auch als Ersatzschaltbild angesehen werden kann, als Spannungsquelle mit der Spannung $U_G$ berücksichtigt.

Die generatorseitigen Spannungen $U_1$, $U_2$ und $U_N$ und die Teilströme $i_1$, $i_2$ und $i_N$ können an einem Erfassungspunkt 261, 262 bzw. 263 erfasst werden und an das jeweilige Steuerteil 241 - 243 übertragen werden bzw. das jeweilige Steuerteil 241 - 243 erfasst die jeweilige Spannung und den jeweiligen Teilstrom an dem Erfassungspunkt. Die Steuerteile 241 - 243 können dann die so erfassten Werte an eine Zentralsteuerung und/oder an eine Steuereinheit übermitteln.

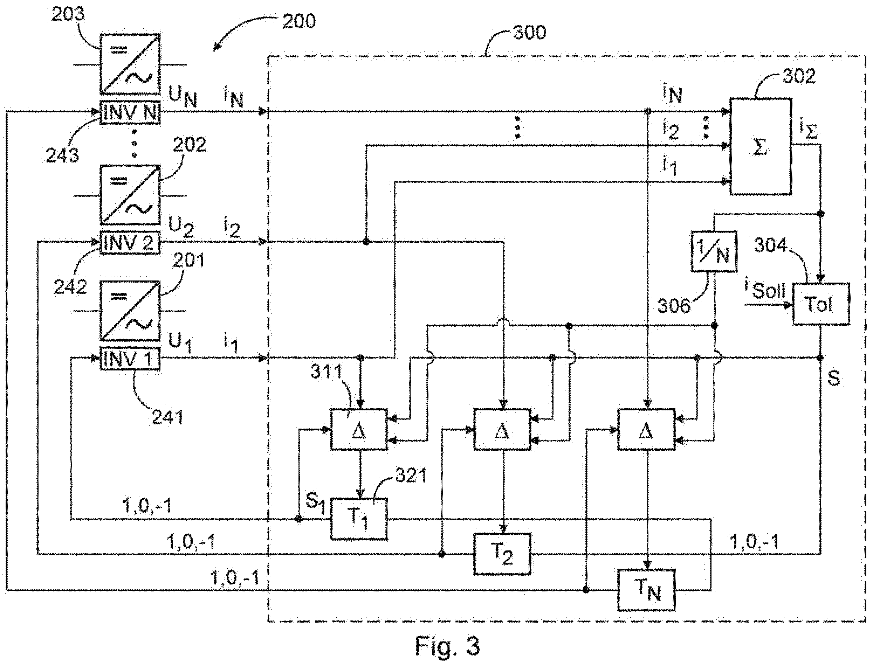

Figur 3 veranschaulicht in einer vereinfachenden Art und Weise ein mögliches Ansteuerkonzept schematisch.

Dabei verwendet Figur 3 eine Teilgleichrichteranordnung 200 einer Phase, wie sie in Figur 2 erläutert wurde. In der Figur 3 ist von der Teilgleichrichteranordnung 200 einer Phase der Übersichtlichkeit halber aber nur ein Teil von dem dargestellt, der in Figur 2 dargestellt ist. Besonders sind zu jedem Teilgleichrichter 201 - 203 die Steuerteile 241 - 243 dargestellt. Diese Steuerteile 241 - 243 erfassen die generatorseitigen Spannungen U1, U2 und UN sowie die Teilströme $i_1$, $i_2$ und $i_N$. Diese Werte werden an eine Zentralsteuerung 300 übergeben, die hier schematisch durch eine gestrichelte Umrandung abgegrenzt ist.

Von diesen Werten werden jedenfalls die Teilströme $i_1$, $i_2$ - $i_N$ in einem Summierglied 302 aufsummiert und ergeben dann den Summenstrom $i_\Sigma$. Dieser Summenstrom $i_\Sigma$ kann dem Summenstrom $i_S$ der Figur 2 entsprechen bzw. sollte diesem idealisierend entsprechen. Der Summenstrom $i_S$ der Figur 2 bezeichnet insoweit allerdings den tatsächlichen Summenstrom, wohingegen der Summenstrom $i_\Sigma$ der Figur 3 eine Rechengröße ist, nämlich die Summe der Teilströme $i_1$, $i_2$ - $i_N$. Bei zulässiger Vernachlässigung von Messfehlern oder Messungenauigkeiten entspricht der berechnete Summenstrom $i_\Sigma$ dem tatsächlichen Summenstrom $i_S$ der Figur 2.

Jedenfalls wird dieser berechnete Summenstrom $i_\Sigma$ in einen Modulationsblock 304 eingegeben. Der Modulationsblock 304 verwendet ein Toleranzbandverfahren, um einen Sollstrom $i_{Soll}$ zu modulieren. Dafür wird um diesen vorgegebenen Strom $i_{Soll}$, der nach Betrag, Frequenz und Phase vorgegeben wird, und somit als sinusförmiger Strom vorgegeben wird, ein Toleranzband gelegt. Abhängig davon, ob der Summenstrom $i_\Sigma$ eine obere oder untere Toleranzgrenze berührt, wird ein Schaltsignal zwischen 0 und 1, oder zwischen 0 und -1 ausgegeben. Das hängt zusätzlich davon ab, ob der zu erzeugende Strom gerade positiv oder negativ ist, um es anschaulich zu sagen.

Das Ergebnis des Modulationsblocks, also des Toleranzbandverfahrens, das in dem Modulationsblock 304 ausgeführt wird, ist somit ein Schaltsignal, das grundsätzlich für jeden Teilgleichrichter vorgesehen ist. Der Teilgleichrichter soll entsprechend dem Schaltsignal die Schaltspannung $U_{S1}$, $U_{S2}$ bzw. $U_{SN}$ schalten, nämlich auf den negativen Wert, den positiven Wert, oder auf null.

Somit kann dieses von dem Modulationsblock 304 ausgegebene Schaltsignal die Schalterstellung in jedem Teilgleichrichter 201, 202 oder 203 schalten. Stellen sich etwaige Kreisströme ein, die beispielsweise den Teilstrom I1 und den Teilstrom I2 beeinflussen, so hat dieser aber keine Auswirkung auf das Schaltsignal, das durch das Toleranzbandverfahren in dem Modulationsblock 304 erzeugt wird.

Dadurch kann bereits ein wichtiges Ziel erreicht werden, nämlich die Erzeugung des Summenstroms durch parallelgeschaltete Teilgleichrichter im Wesentlichen unabhängig von Kreisströmen. Darüber hinaus wird aber vorgeschlagen, zusätzlich zeitliche Unterschiede zwischen den einzelnen Teilgleichrichtern 201 - 203 zu berücksichtigen. Eine solche Berücksichtigung kann zwar zentralistisch in einem gemeinsamen Rechenblock beispielsweise durchgeführt werden, zum Zwecke der Veranschaulichung wird dies in Figur 3 aber für jeden Teilgleichrichter 201 - 203 einzeln dargestellt. Die nachfolgend erläuterte Funktionsweise ist dabei aber dem Grunde nach für alle Teilgleichrichter 201 - 203 gleich. Insoweit wird dies nachfolgend für den Teilgleichrichter 201 erläutert.

Der Teilgleichrichter 201, der insoweit auch als erster Teilgleichrichter bezeichnet werden kann, überträgt die generatorseitige Spannung $U_1$ und seinen Teilstrom $i_1$ an die Zentralsteuerung und diese Werte werden dabei auch an einen ersten Laufzeiterfassungsblock 311 gegeben. In dem Laufzeiterfassungsblock wird insoweit eine Laufzeit erfasst und davon abhängig eine Schaltzeitanpassung bestimmt. Die erfasste Schaltzeitanpassung wird dem Anpassungsblock 321 übergeben. Der Anpassungsblock 321 führt im Wesentlichen eine Verzögerung des Schaltsignals S durch. Das Ergebnis ist ein angepasstes Schaltsignal $S_1$. Das angepasste Schaltsignal $S_1$ ist weiterhin ein Schaltsignal, das die Werte 1, 0 oder -1 aufweisen kann, die allerdings auch anders verschlüsselt werden können. Das angepasste Schaltsignal $S_1$ ist aber gegenüber dem unveränderten Schaltsignal S verzögert.

Der Laufzeiterfassungsblock 311 erhält auch dieses angepasste Schaltsignal $S_1$ sowie die generatorseitige Spannung $i_1$ und den Teilstrom $i_1$ des ersten Teilgleichrichters. Der Laufzeiterfassungsblock 311 kann dann durch Berücksichtigung des angepassten Schaltsignals $S_1$ erkennen, wann genau ein Schaltbefehl übertragen wurde. Ein Schaltbefehl kann insoweit einer sein, bei dem das Schaltsignal von 0 auf 1 oder zurück, oder von 0 auf -1 oder zurück wechselt. Dieser Zeitpunkt ist dann in dem Laufzeiterfassungsblock 311 genau bekannt und dieser kann verglichen werden mit dem resultierenden Ergebnis der von dem ersten Wechselrichter 201 erzeugten generatorseitigen Spannung $U_1$ und Teilstrom $i_1$. Somit kann dann erkannt werden, welches Signal genau durch dieses angepasste Schaltsignal resultiert. Besonders das zeitliche Verhalten der resultierenden Signale wird dabei berücksichtigt, aber auch eine Amplitude bzw. ein Amplitudenverlauf. Dabei kommt in Betracht, dass auch nur eins der beiden Signale, also nur die Spannung oder nur der Teilstrom, berücksichtigt werden.

Außerdem berücksichtigt der Laufzeiterfassungsblock 311 das unveränderte Schaltsignal S. Daraus kann abgeleitet werden, wie das insgesamt gewünschte Signal aussehen sollte.

Außerdem oder alternativ kann auch ein Mittelwert der Teilströme $i_1$, $i_2$ und $i_N$ verwendet werden. Um diesen Mittelwert zu berechnen, braucht nur der berechnete Summenstrom $i_\Sigma$ durch die Anzahl der Teilgleichrichter, also N, geteilt zu werden. Das wird durch den Quotientenblock 306 veranschaulicht.

Insoweit berechnet der Laufzeiterfassungsblock 311 für die Schaltzeitanpassung Zeitverzögerungen, um die das Schaltsignal S angepasst wird, um das angepasste Schaltsignal $S_1$ zu erhalten. Diese Zeitverzögerungen können dabei für eine ansteigende Flanke von 0 auf 1 anders sein als für die wieder abfallende Flanke von 1 auf 0. Gleiches gilt für die Flanke von 0 auf -1 und von -1 auf 0 zurück. Dadurch können nicht nur Verzögerungen vorgesehen sein, um Laufzeitverzögerungen auszugleichen, sondern es können auch Pulsbreiten verändert werden. Durch eine ansteigende Flanke beispielsweise von 0 auf 1 und eine abfallende Flanke zurück von 1 auf 0 ergibt sich somit ein Spannungspuls mit einer Pulsbreite. Werden für die anfallende Flanke von 0 auf 1 und die abfallende Flanke von 1 auf 0 unterschiedliche Verzögerungszeiten vorgesehen, kann dadurch die Pulsbreite verändert werden.

In diesem Sinne wird mit den Laufzeitblöcken 312 und 313 und den Anpassungsblöcken 322 und 323 sinngemäß für die weiteren Teilgleichrichter 202 und 203 vorgegangen. Das Ergebnis ist dann, dass für jeden Teilgleichrichter 201 - 203 ein angepasstes Schaltsignal $S_1$ - $S_3$ erzeugt wird. Jedes angepasste Schaltsignal $S_1$ - $S_3$ kann dabei unterschiedliche Laufzeiten berücksichtigen und auch unterschiedlich breite Pulse erzeugen.

**Patentansprüche**

1. Verfahren zum Steuern einer Windenergieanlage (100) und die Windenergieanlage umfasst

   - einen Generator (101) zum Erzeugen eines Generatorstroms mit einer oder mehreren Generatorstromphasen, und
   - einen aktiven Gleichrichter zum Gleichrichten und Steuern des Generatorstroms, wobei der Gleichrichter für jede Generatorstromphase

      - mehrere steuerbare Teilgleichrichter (201-203) aufweist,
      - jeder steuerbare Teilgleichrichter (201-203) eine Teilinduktivität (231-233) aufweist, und
      - jeder steuerbare Teilgleichrichter (201-203) einen Teilstrom der Generatorstromphase steuert und jede Generatorstromphase einen Summenstrom als Summe aller Teilströme der betreffenden Generatorstromphase bildet,

   **dadurch gekennzeichnet, dass**
   - der aktive Gleichrichter nach einem Hystereseverfahren arbeitet und so gesteuert wird, dass für jede Generatorstromphase

- der Summenstrom erfasst wird und
- für jeden Summenstrom ein Toleranzband mit einer oberen und einer unteren Bandgrenze vorgegeben wird und

- jeder Teilgleichrichter (201-203) abhängig davon seinen Teilstrom steuert, ob der Summenstrom die obere oder untere Bandgrenze erreicht, wobei
- jeder Teilgleichrichter (201-203) wenigstens ein Schaltmittel aufweist, um seinen Teilstrom durch Schalten des Schaltmittels zu steuern und
- jedem Teilgleichrichter (201-203) eine individuelle Verzögerungszeit zugeordnet ist, und
- jeder Teilgleichrichter (201-203) seinen Teilstrom zusätzlich in Abhängigkeit dieser individuellen Verzögerungszeit steuert, und dass
- jeder Teilgleichrichter (201-203) wenigstens eines seiner Schaltmittel schaltet,
- nachdem der Summenstrom eine bzw. die obere oder untere Bandgrenze erreicht hat, und
- die individuelle Verzögerungszeit verstrichen ist.

2. Verfahren nach einem der vorstehenden Ansprüche,
**dadurch gekennzeichnet, dass**

- eine bzw. die Verzögerungszeit in Abhängigkeit der Teilinduktivität des Teilgleichrichters (201-203) bestimmt wird.

3. Verfahren nach einem der vorstehenden Ansprüche,
**dadurch gekennzeichnet, dass**

- eine Abweichung jedes Teilstroms von einem mittleren Teilstrom erfasst wird, und
- abhängig von der Abweichung der Teilgleichrichter (201-203) gesteuert wird, insbesondere eine bzw. die individuelle Verzögerungszeit bestimmt wird.

4. Verfahren nach einem der vorstehenden Ansprüche,
**dadurch gekennzeichnet, dass**

- in Abhängigkeit von

- einer Teilgleichrichterspannung,
- einem der Teilgleichrichterspannung zugeordneten Stromverlauf und
- einer erfassten Generatorinduktivität des Generators (101)

- ein dynamischer Zusammenhang zwischen einer Schalthandlung eines Teilgleichrichters und eines resultierenden Teilstroms aufgestellt wird, insbesondere als Übertragungsfunktion, und
- in Abhängigkeit von diesem dynamischen Zusammenhang bzw. der Übertragungsfunktion und in Abhängigkeit von dem erfassten Summenstrom der Teilgleichrichter (201-203) gesteuert wird, insbesondere, dass
- in Abhängigkeit von diesem dynamischen Zusammenhang bzw. der Übertragungsfunktion eine bzw. die Verzögerungszeit bestimmt wird und der Teilgleichrichter (201-203) in Abhängigkeit von der so ermittelten Verzögerungszeit seine Schalthandlungen steuert.

5. Verfahren nach einem der vorstehenden Ansprüche,
**dadurch gekennzeichnet, dass**

- eine Zentralsteuerung (300)

- den Summenstrom erfasst,
- Steuersignale für die Teilgleichrichter (201-203) erzeugt und
- an die Teilgleichrichter (201-203) überträgt, um die Teilgleichrichter zu steuern, wobei

- insbesondere individuelle Schaltzeitanpassungen für die Teilgleichrichter (201-203) ermittelt und optional an die Teilgleichrichter (201-203) übertragen werden, insbesondere durch die Zentralsteuerung (300), und für die Schaltzeitanpassungen

- Laufzeiten für das Übertragen von Steuersignalen der Zentralsteuerung (300) zum jeweiligen Teilgleichrichter (201-203) ermittelt und beim Ermitteln der Schaltzeitanpassungen berücksichtigt werden, wobei insbesondere
- die individuellen Verzögerungszeiten der Teilgleichrichter (201-203) und/oder
- die Laufzeiten für das Übertragen von Informationen von der Zentralsteuerung (300) zum jeweiligen Teilgleichrichter (201-203)

- in einem Steuerprotokoll abgespeichert und zum Steuern der Teilgleichrichter (201-203) verwendet werden.

6. Verfahren nach einem der vorstehenden Ansprüche,
**dadurch gekennzeichnet, dass**

- jeder Teilgleichrichter (201-203) Schalthandlungen zum Erzeugen eines Spannungspulses ausführt, wobei jeweils

- eine auslösende Schalthandlung vorgesehen ist, um einen Spannungspuls auszulösen, und
- eine beendende Schalthandlung vorgesehen ist, um einen Spannungspuls zu beenden, und
- ein zeitlicher Abstand zwischen der auslösenden Schalthandlung und der beendenden Schalthandlung des Spannungspulses eine Pulsbreite des Spannungspulses beschreibt, wobei

- für die auslösende Schalthandlung und die beendende Schalthandlung unterschiedliche Schaltzeitanpassungen bzw. unterschiedliche und insbesondere variable Verzögerungszeiten vorgesehen sind, um dadurch die Pulsbreite zu steuern.

7. Verfahren nach einem der vorstehenden Ansprüche,
**dadurch gekennzeichnet, dass**

- jeweils drei Teilgleichrichteranordnungen (200), nämlich jeweils eine Teilgleichrichteranordnung einer ersten, zweiten und dritten Generatorstromphase, zusammen mit einer netzseitigen Teilwechselrichteranordnung einen Teil-Back-to-Back Umrichter bilden,
- jeder Teil-Back-to-Back-Umrichter einen gemeinsamen Gleichspannungszwischenkreis aufweist, auf den die Teilgleichrichter jeweils einer Teilgleichrichteranordnung gleichrichten und von dem aus die Teilwechselrichteranordnung wechselrichtet, und
- die Gleichspannungszwischenkreise mehrerer Teil-Back-to-Back-Umrichter gekoppelt sind, um Kreisströme über diese gekoppelten Gleichspannungszwischenkreise zuzulassen.

8. Windenergieanlage (100) umfassend

- einen Generator (101) zum Erzeugen eines Generatorstroms mit einer oder mehreren Generatorstromphasen, und
- einen aktiven Gleichrichter zum Gleichrichten und Steuern des Generatorstroms, wobei der Gleichrichter für jede Generatorstromphase

- mehrere steuerbare Teilgleichrichter (201-203) aufweist,
- jeder steuerbare Teilgleichrichter (201-203) eine Teilinduktivität (231-233) aufweist, und
- jeder steuerbare Teilgleichrichter (201-203) einen Teilstrom der Generatorstromphase steuert und jede Generatorstromphase einen Summenstrom als Summe aller Teilströme der betreffenden Generatorstromphase bildet,

**dadurch gekennzeichnet, dass**
- die Windenergieanlage (100) eine Steuereinheit (300) zum Steuern des aktiven Gleichrichters aufweist, und wobei die Steuereinheit (300) dazu eingerichtet ist, dass
- der aktive Gleichrichter nach einem Hystereseverfahren arbeitet und so gesteuert wird, dass für jede Generatorstromphase
- der Summenstrom erfasst wird und
- für jeden Summenstrom ein Toleranzband mit einer oberen und einer unteren Bandgrenze vorgegeben wird und

- jeder Teilgleichrichter (201-203) abhängig davon seinen Teilstrom steuert, ob der Summenstrom die obere oder untere Bandgrenze erreicht, wobei
- jeder Teilgleichrichter (201-203) wenigstens ein Schaltmittel aufweist, um seinen Teilstrom durch Schalten des Schaltmittels zu steuern und
- jedem Teilgleichrichter (201-203) eine individuelle Verzögerungszeit zugeordnet ist, und
- jeder Teilgleichrichter (201-203) seinen Teilstrom zusätzlich in Abhängigkeit dieser individuellen Verzögerungszeit steuert, und dass
- jeder Teilgleichrichter (201-203) wenigstens eines seiner Schaltmittel schaltet,
- nachdem der Summenstrom eine bzw. die obere oder untere Bandgrenze erreicht hat, und
- die individuelle Verzögerungszeit verstrichen ist.

**Claims**

1. A method for controlling a wind power installation (100) and the wind power installation comprises

   - a generator (101) for generating a generator current with one or more generator current phases, and
   - an active rectifier for rectifying and controlling the generator current, wherein for each generator current phase the rectifier

      - has a plurality of controllable sub-rectifiers (201-203),
      - each controllable sub-rectifier (201-203) has a partial inductance (231-233), and
      - each controllable sub-rectifier (201-203) controls a partial current of the generator current phase and each generator current phase forms a summation current as a sum of all the partial currents of the relevant generator current phase,

   **characterized in that**
   - the active rectifier operates according to a hysteresis method and is controlled so that for each generator current phase

      - the summation current is detected and
      - a tolerance band with an upper and a lower band limit is prescribed for each summation current and
      - each sub-rectifier (201-203) controls the partial current thereof depending on whether the summation current reaches the upper or lower band limit, wherein
      - each sub-rectifier (201-203) has at least one switching means in order to control the partial current thereof by way of switching the switching means and
      - each sub-rectifier (201-203) is assigned an individual delay time, and
      - each sub-rectifier (201-203) controls the partial current thereof additionally depending on said individual delay time, and that
      - each sub-rectifier (201-203) switches at least one of the switching means thereof,
      - after the summation current has reached an or the upper or lower band limit, and
      - the individual delay time has elapsed.

2. The method as claimed in one of the preceding claims,
   **characterized in that**

   - a or the delay time is determined depending on the partial inductance of the sub-rectifier (201-203).

3. The method as claimed in one of the preceding claims,
   **characterized in that**

   - a deviation of each partial current from an average partial current is detected, and
   - the sub-rectifier (201-203) is controlled, in particular a or the individual delay time is determined, depending on the deviation.

4. The method as claimed in one of the preceding claims,
   **characterized in that**

- depending on

- a sub-rectifier voltage,
- a current profile associated with the sub-rectifier voltage and
- a detected generator inductance of the generator (101)

- a dynamic correlation between a switching process of a sub-rectifier and a resulting partial current is established, in particular as a transmission function, and
- the sub-rectifier (201-203) is controlled depending on this dynamic correlation or the transmission function and depending on the detected summation current, in particular **in that**
- a or the delay time is determined depending on this dynamic correlation or the transmission function and the sub-rectifier (201-203) controls the switching processes thereof depending on the delay time determined in this way.

5. The method as claimed in one of the preceding claims,
**characterized in that**

- a central control system (300)

- detects the summation current,
- generates control signals for the sub-rectifiers (201-203) and
- transmits same to the sub-rectifiers (201-203) in order to control the sub-rectifiers, wherein

- in particular individual switching time adjustments for the sub-rectifiers (201-203) are determined and optionally transmitted to the sub-rectifiers (201-203), in particular by way of the central control system (300), and for the switching time adjustments

- propagation times for the transmission of control signals of the central control system (300) to the respective sub-rectifier (201-203) are determined and taken into account in the determination of the switching time adjustments, wherein in particular
- the individual delay times of the sub-rectifiers (201-203) and/or
- the propagation times for the transmission of information from the central control system (300) to the respective sub-rectifier (201-203)

- are stored in a control protocol and used to control the sub-rectifiers (201-203).

6. The method as claimed in one of the preceding claims,
**characterized in that**

- each sub-rectifier (201-203) performs switching processes in order to generate a voltage pulse, wherein in each case

- a triggering switching process is provided to trigger a voltage pulse, and
- a terminating switching process is provided to terminate a voltage pulse, and
- a time interval between the triggering switching process and the terminating switching process of the voltage pulse describes a pulse width of the voltage pulse, wherein

- different switching time adjustments and different and in particular variable delay times are provided for the triggering switching process and the terminating switching process in order to control the pulse width as a result.

7. The method as claimed in one of the preceding claims,
**characterized in that**

- in each case three sub-rectifier arrangements (200), namely in each case a sub-rectifier arrangement of a first, second and third generator current phase, together with a network-based sub-inverter arrangement form a back-to-back sub-converter,
- each back-to-back sub-converter has a common DC link to which the sub-rectifiers of a respective sub-rectifier arrangement rectify and from which the sub-inverter arrangement inverts, and
- the DC links of a plurality of back-to-back sub-converters are coupled in order to permit circulating currents via said coupled DC links.

8. A wind power installation (100) comprising

- a generator (101) for generating a generator current with one or more generator current phases, and
- an active rectifier for rectifying and controlling the generator current, wherein for each generator current phase the rectifier

- has a plurality of controllable sub-rectifiers (201-203),
- each controllable sub-rectifier (201-203) has a partial inductance (231-233), and
- each controllable sub-rectifier (201-203) controls a partial current of the generator current phase and each generator current phase forms a summation current as a sum of all the partial currents of the relevant generator current phase,

**characterized in that**
- the wind power installation (100) has a control unit (300) for controlling the active rectifier, and wherein the control unit (300) is set up in such a way that
- the active rectifier operates according to a hysteresis method and is controlled so that for each generator current phase

- the summation current is detected and
- a tolerance band with an upper and a lower band limit is prescribed for each summation current and
- each sub-rectifier (201-203) controls the partial current thereof depending on whether the summation current reaches the upper or lower band limit, wherein
- each sub-rectifier (201-203) has at least one switching means in order to control the partial current thereof by way of switching the switching means and
- each sub-rectifier (201-203) is assigned an individual delay time, and
- each sub-rectifier (201-203) controls the partial current thereof additionally depending on said individual delay time, and that
- each sub-rectifier (201-203) switches at least one of the switching means thereof,
- after the summation current has reached an or the upper or lower band limit, and
- the individual delay time has elapsed.


**Revendications**

1. Procédé de commande d'une éolienne (100) et l'éolienne comprend

- un générateur (101) pour produire un courant de générateur avec une ou plusieurs phases de courant de générateur, et
- un redresseur actif pour redresser et commander le courant de générateur, dans lequel le redresseur pour chaque phase de courant de générateur

- présente plusieurs redresseurs partiels (201-203) commandables,
- chaque redresseur partiel (201-203) commandable présente une inductance partielle (231-233), et
- chaque redresseur partiel (201-203) commandable commande un courant partiel de la phase de courant de générateur et chaque phase de courant de générateur forme un courant total comme somme de tous les courants partiels de la phase de courant de générateur concernée,

**caractérisé en ce que**
- le redresseur actif fonctionne selon un procédé d'hystérésis et est commandé de sorte que pour chaque phase de courant de générateur

- le courant total est détecté et
- une bande de tolérance avec une limite de bande supérieure et une inférieure est prédéfinie pour chaque courant total et
- chaque redresseur partiel (201-203) commande son courant partiel selon que le courant total atteint la limite de bande supérieure ou inférieure, dans lequel

- chaque redresseur partiel (201-203) présente au moins un moyen de commutation pour commander son courant partiel par commutation du moyen de commutation et
- une durée de retard individuelle est attribuée à chaque redresseur partiel (201-203), et
- chaque redresseur partiel (201-203) commande son courant partiel en plus en fonction de ce temps de retard individuel, et que

- chaque redresseur partiel (201-203) commute au moins un de ses moyens de commutation,
- après que le courant total a atteint une ou la limite de bande supérieure ou inférieure, et que
- le temps de retard individuel s'est écoulé.

2. Procédé selon l'une quelconque des revendications précédentes, **caractérisé en ce que**

- un ou le temps de retard est défini en fonction de l'inductance partielle du redresseur partiel (201-203).

3. Procédé selon l'une quelconque des revendications précédentes, **caractérisé en ce que**

- un écart de chaque courant partiel par rapport à un courant partiel moyen est détecté, et
- est commandé en fonction de l'écart des redresseurs partiels (201-203), en particulier un ou le temps de retard individuel est défini.

4. Procédé selon l'une quelconque des revendications précédentes, **caractérisé en ce que**

- en fonction

- d'une tension de redresseur partiel,
- d'un profil de courant attribué à la tension de redresseur partiel et
- d'une inductance de générateur détectée du générateur (101)

- une relation dynamique est établie entre une action de commutation d'un redresseur partiel et un courant partiel résultant, en particulier en tant que fonction de transmission, et
- est commandée en fonction de cette relation dynamique ou de la fonction de transmission et en fonction du courant total détecté des redresseurs partiels (201-203), en particulier que
- en fonction de cette relation dynamique ou de la fonction de transmission, un ou le temps de retard est défini et le redresseur partiel (201-203) commande ses actions de commutation en fonction du temps de retard ainsi déterminé.

5. Procédé selon l'une quelconque des revendications précédentes, **caractérisé en ce que**

- une commande centrale (300)

- détecte le courant total,
- produit des signaux de commande pour les redresseurs partiels (201-203) et
- les transmet aux redresseurs partiels (201-203) pour commander les redresseurs partiels, dans lequel

- en particulier des ajustements de temps de commutation individuels pour les redresseurs partiels (201-203) sont déterminés et facultativement transmis aux redresseurs partiels (201-203), en particulier par la commande centrale (300), et pour les ajustements de temps de commutation

- les temps de propagation pour la transmission de signaux de commande de la commande centrale (300) au redresseur partiel (201-203) respectif sont déterminés et pris en compte lors de la détermination des ajustements de temps de commutation, dans lequel en particulier
- les temps de retard individuels des redresseurs partiels (201-203) et/ou
- les temps de propagation pour la transmission d'informations de la commande centrale (300) au redresseur partiel (201-203) respectif

- sont mis en mémoire dans un protocole de commande et utilisés pour commander les redresseurs partiels (201-203).

6. Procédé selon l'une quelconque des revendications précédentes,
   **caractérisé en ce que**

   - chaque redresseur partiel (201-203) exécute des actions de commutation pour produire une impulsion de tension, dans lequel respectivement
   - une action de commutation de déclenchement est prévue pour déclencher une impulsion de tension, et
   - une action de commutation de fin est prévue pour mettre fin à une impulsion de tension, et
   - un intervalle de temps entre l'action de commutation de déclenchement et l'action de commutation de fin de l'impulsion de tension décrit une largeur d'impulsion de l'impulsion de tension, dans lequel
   - des ajustements de temps de commutation différents ou des temps de retard différents et en particulier variables sont prévus pour l'action de commutation de déclenchement et l'action de commutation de fin, afin de commander ainsi la largeur d'impulsion.

7. Procédé selon l'une quelconque des revendications précédentes,
   **caractérisé en ce que**

   - respectivement trois ensembles de redresseurs partiels (200), à savoir respectivement un ensemble de redresseurs partiels d'une première, deuxième et troisième phase de courant de générateur, conjointement avec un ensemble de redresseurs partiels côté réseau, forment un convertisseur dos à dos partiel,
   - chaque convertisseur dos à dos partiel présente un circuit intermédiaire à tension continue commun, sur lequel les redresseurs partiels de respectivement un ensemble de redresseurs partiels effectuent un redressement et à partir duquel l'ensemble d'onduleurs partiels effectue une ondulation, et
   - les circuits intermédiaires à tension continue de plusieurs convertisseurs dos à dos partiels sont couplés pour permettre des courants de circuit sur ces circuits intermédiaires à tension continue couplés.

8. Éolienne (100) comprenant

   - un générateur (101) pour produire un courant de générateur avec une ou plusieurs phases de courant de générateur, et
   - un redresseur actif pour redresser et commander le courant de générateur, dans lequel le redresseur pour chaque phase de courant de générateur

     - présente plusieurs redresseurs partiels (201-203) commandables,
     - chaque redresseur partiel (201-203) commandable présente une inductance partielle (231-233), et
     - chaque redresseur partiel (201-203) commandable commande un courant partiel de la phase de courant de générateur et chaque phase de courant de générateur forme un courant total comme somme de tous les courants partiels de la phase de courant de générateur concernée,

   **caractérisé en ce que**
   - l'éolienne (100) présente une unité de commande (300) pour commander le redresseur actif, et dans laquelle l'unité de commande (300) est conçue pour que
   - le redresseur actif fonctionne selon un procédé d'hystérésis et est commandé de sorte que pour chaque phase de courant de générateur

     - le courant total est détecté et
     - une bande de tolérance avec une limite de bande supérieure et une inférieure est prédéfinie pour chaque courant total et
     - chaque redresseur partiel (201-203) commande son courant partiel selon que le courant total atteint la limite de bande supérieure ou inférieure, dans laquelle
     - chaque redresseur partiel (201-203) présente au moins un moyen de commutation pour commander son courant partiel par commutation du moyen de commutation et
     - une durée de retard individuelle est attribuée à chaque redresseur partiel (201-203), et
     - chaque redresseur partiel (201-203) commande son courant partiel en plus en fonction de ce temps de retard individuel, et que
     - chaque redresseur partiel (201-203) commute au moins un de ses moyens de commutation,

- après que le courant total a atteint une ou la limite de bande supérieure ou inférieure, et que
- le temps de retard individuel s'est écoulé.

Fig. 1

Fig. 2

Fig. 3

**EP 3 979 484 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014219052 A1
- JP 2001314086 A
- EP 2262089 B1